(19) **Europäisches Patentamt / European Patent Office / Office européen des brevets**

(11) **EP 1 316 138 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(21) Anmeldenummer: **01976141.0**

(22) Anmeldetag: **23.08.2001**

(51) Int Cl.:
**H02M 3/156** (2006.01)

(86) Internationale Anmeldenummer:
**PCT/EP2001/009763**

(87) Internationale Veröffentlichungsnummer:
**WO 2002/021669 (14.03.2002 Gazette 2002/11)**

(54) **CURRENT-MODE-SCHALTREGLER**

CURRENT MODE SWITCHING CONTROLLER

REGULATEUR DE COMMUTATION A MODE COURANT

(84) Benannte Vertragsstaaten:
**DE FR GB IT**

(30) Priorität: **04.09.2000 DE 10043482**

(43) Veröffentlichungstag der Anmeldung:
**04.06.2003 Patentblatt 2003/23**

(73) Patentinhaber: **Infineon Technologies AG
85579 Neubiberg (DE)**

(72) Erfinder: **TAGHIZADEH-KASCHANI, Karim-Thomas
82008 Unterhaching (DE)**

(74) Vertreter: **Bickel, Michael
Westphal, Mussgnug & Partner
Patentanwälte
Herzog-Wilhelm-Strasse 26
80331 München (DE)**

(56) Entgegenhaltungen:
**EP-A- 0 734 009    DE-A- 19 814 681
US-A- 5 982 160**

• **PATENT ABSTRACTS OF JAPAN vol. 2000, no. 08, 6. Oktober 2000 (2000-10-06) -& JP 2000 139073 A (MATSUSHITA ELECTRIC IND CO LTD), 16. Mai 2000 (2000-05-16)**

**Beschreibung**

Die Erfindung betrifft einen Current-Mode-Schaltregler, insbesondere für getaktete Stromversorgungen und/oder Schaltnetzteile.

Schaltregler können in einer Vielzahl von verschiedenen Anwendungsmöglichkeiten, wie z.B. bei getakteten Stromversorgungen und Schaltnetzteilen, eingesetzt werden. Bei einer getakteten Stromversorgung wird eine Eingangsspannung - beispielsweise eine gleichgerichtete Netzspannung - über einen Pulsweitenmodulator und einem diesem nachgeschalteten Leistungsschalter in eine im wesentlichen gleichgerichtete, gepulste Gleichspannung mit variablem Tastverhältnis umgewandelt. Die Aufgabe des Schaltreglers besteht darin, die Spannung am Ausgang eines Filters der Stromversorgung über einen möglichst weiten Ausgangsstrombereich konstant zu halten. Der Schaltregler muss ferner dazu ausgelegt sein, den Ausgangsstrom und die Ausgangsspannung des Filters zu erfassen und daraus ein Regelsignal zur Ansteuerung des Leistungsschalters zu erzeugen.

Zur Regelung von solchen Schaltreglern existieren im wesentlichen drei verschiedene Regelstrategien. Die Voltage-Mode-Regelung, die Feed-Forward-Regelung und die Current-Mode-Regelung. Diese Regelstrategien sind beispielsweise in R. E. Tarter, Solid-State Power Conversion Handbook, Wiley Interscience, New York, 1993, beschrieben.

Eine besonders elegante und effektive Regelungsart, die zudem nur vergleichsweise geringe Kompensationskapazitäten erfordert und die somit ideal für den Einsatz bei integrierten Schaltreglern ist, stellt die Current-Mode-Regelung dar. Current-Mode-Schaltregler weisen einen inneren Regelkreis zur Regelung des Laststromes sowie eine äußeren Regelkreis, der zusammen mit dem inneren Regelkreis der Regelung der Ausgangsspannung dient auf. Bei eingeschaltetem Schalter weist die Spannung an einem Messwiderstand verursacht durch den rampenförmig ansteigenden Strom durch eine Drosselspule des Schaltreglers ebenfalls eine rampenförmige Gestalt auf. Bei Erreichen einer durch den äußeren Regelkreis vorgegebenen Sollspannung schaltet der Schalter ab.

Bei den meisten Spannungsreglern, beispielsweise bei Linearreglern oder Schaltregler, besteht oftmals der Wunsch, die Ausgangsspannung des Reglers z.B. über extern anbringbare Bauelemente oder Komponenten zu erhöhen, um dadurch einen flexibleren Einsatzbereich des Spannungsreglers zu gewährleisten. Bei als Linearregler ausgebildeten Spannungsreglern kann dies sehr einfach durch Vorschalten eines Spannungsteilers vor den Eingang erreicht werden, mit dem der Linearregler die Höhe der Ausgangsspannung überwacht. Eine derartige Regelstrategie wird auch als Feedback-Teiler bezeichnet.

Eine derartige Maßnahme ist prinzipiell auch bei Schaltreglern möglich. Allerdings muss bei Schaltreglern, die nach der sogenannten Current-Mode-Regelung betrieben werden, darauf geachtet werden, dass die zur Vermeidung subharmonischer Oszillationen zur Stromrampe hinzuaddierte Zusatzrampe für die sogenannte Slope Compensation an eine veränderte Ausgangsspannung angepasst wird. Hier ist jedoch zu berücksichtigen, dass einerseits die Amplitude der Laststromrampe bei Erhöhung der Ausgangsspannung zunimmt, wobei sie dabei jedoch immer deutlich kleiner als die Versorgungsspannung der beteiligten Schaltungsblöcke bleiben muss, da sonst die Vorteile einer Current-Mode-Regelung verschwinden. Auf der anderen Seite darf die Amplitude dieser Stromrampe auch nicht zu klein werden, um eine Störunempfindlichkeit gegenüber Störsignalen zu gewährleisten.

Das Dokument DE-A1-198 14681 zeigt einen Current-Mode-Schaltregler

-   mit einem steuerbaren Halbleiterschalter, dessen Laststrecke zwischen einer ersten Klemme mit einem ersten Versorgungspotential und einer zweiten Klemme mit einem zweiten Versorgungspotential angeordnet ist,
-   mit einer induktiven Impedana, die in Reihe zur Laststrecke des steuerbaren Halbleiterschalters angeordnet ist
-   mit einem aüßeren Regelkreis zur Spannungregelung und einem mit dem aüßeren Regelkreis gekoppelten inneren Regelkreis zur Laststromregelung, die den steuerbaren Halbleiterschalten nach Maßgabe eines Laststromes und des Ausgangs-potentials ansteuern,
-   mit einem Integrator, in den eine über der induktiven Impedana abfallende Spannung eingekoppelt wird, der durch zeitliche Integration der Spannung ein einen Laststrom abbildendes Regelsignal erzeugt, welches als Regelgröße dem inneren Regelkreis zugeführt wird.

Der vorliegenden Erfindung liegt daher die Aufgabe zugrunde, einen Current-Mode-Schaltregler bereitzustellen, der eine von der jeweiligen Ausgangsspannung weitestgehend unabhängige Regelcharakteristik aufweist.

Erfindungsgemäß wird diese Aufgabe durch einen Current-Mode-Stromregler und ein Schaltnetzteil mit den Merkmalen des Patentanspruchs 1 bzw. des Patentanspruchs 14 gelöst.

Demgemäss ist ein Current-Mode Schaltregler, insbesondere in einem Schaltnetzteil, mit den folgenden Merkmalen vorgesehen:

-   mit mindestens einem steuerbaren Halbleiterschalter, dessen Laststrecke zwischen einer ersten Klemme mit einem ersten Versorgungspotential und einer zweiten Klemme mit einem zweiten Versorgungspotential angeordnet ist,

- mit einer induktiven Impedanz und einem Spannungsteiler, die in Reihe zur Laststrecke des steuerbaren Halbleiterschalters angeordneten sind, an deren Abgriff ein Ausgangspotential abgreifbar ist,
- mit einem äußeren Regelkreis zur Spannungsregelung und einem mit dem äußeren Regelkreis gekoppelten inneren Regelkreis zur Laststromregelung, die den steuerbaren Halbleiterschalter nach Maßgabe eines Laststromes und des Ausgangspotentials ansteuern,
- mit einem Integrator, in den eine über der induktiven Impedanz abfallende Spannung eingekoppelt wird, der durch zeitliche Integration der Spannung ein einen Laststrom abbildendes Regelsignal erzeugt, welches als Regelgröße dem inneren Regelkreis zugeführt wird,
- mit Mitteln zur Adaption der Verstärkung des Integrators, die mindestens eine Transkonduktanz aufweisen, dessen Wert im eingeschwungenen Zustand umgekehrt proportional zum Ausgangspotential ist.

Im eingeschwungenen Zustand, das heißt, bei konstanter Ausgangsspannung, muss der Integrator eine hochlineare Kennlinie aufweisen, da der typischerweise im Integrator mit integrierte Kondensator ein Abbild der als Drosselspule ausgebildeten Impedanz ist. Die Spannung am Kondensator bildet dann den Laststrom durch die Drosselspule durch Integration ab. Erfindungsgemäß ist hier zusätzlich eine spannungsgesteuerte Transkonduktanz im Integrator vorgesehen, der für beliebig vorgegebene, jedoch konstante Spannungen an seinem Eingang jeweils eine konstante Spannung an seinem Ausgang bereitstellt, wobei die Eingangsspannung des Integrators hier gleich der als Regelsignal rückgekoppelten Ausgangsspannung des Schaltreglers ist. Erfindungsgemäß kann dies durch geeignete Adaption der Verstärkung des Integrators erreicht werden, indem der Integrator eine Transkonduktanz aufweist, die sich umgekehrt proportional zu der Ausgangsspannung des Spannungsreglers verhält.

Die Impedanz besteht idealerweise ausschließlich aus einer Drosselspule. Bei Verwendung einer ausschließlich als Drossel ausgebildeten Impedanz kann vorteilhafterweise auf einen Messwiderstand zur Abfassung der Messspannung, wie dies üblicherweise erforderlich ist, verzichtet werden. Die zur Regelung des Laststromes notwendige Messspannung wird an der Drosselinduktivität selbst, die ohnehin für die Funktionsweise des Schaltreglers erforderlich ist, abgegriffen. Man nutzt hier die Beziehung zwischen Strom I und Spannung U an einer Induktivität L, d. h. $U = L\, dI/dt$. Die Drosselspannung U wird anschließend einem Integrator, z.B. einer spannungsgesteuerten Stromquelle mit nachgeschaltetem Integrierglied, zugeführt, so dass die an der Drosselinduktivität abfallende Spannung über die Zeit aufintegriert wird. Auf diese Weise ist ein zusätzlicher, typischerweise extern ausgebildeter Messwiderstand mit allen oben beschriebenen Nachteilen nicht erforderlich.

Da eine Spule typischerweise auch einen resisitiven Anteil aufweist, wäre alternativ auch denkbar, wenn die Impedanz aus einer Reihenschaltung mit einer Drosselspule und einem Widerstandselement besteht. Das Widerstandselement wäre in diesem Fall ein parasitärer Widerstand und/oder ein der Drossel in Reihe zugeschalteter ohmscher Widerstand.

Um den Eingangsspannungsbereich des Spannungsreglers zu erhöhen, wird ein Spannungsteiler bereitgestellt, der in Reihe zur Laststrecke des steuerbaren Halbleiterschalters sowie der Drosseleinrichtung angeordnet ist. Am Mittelabgriff des Spannungsteilers ist das Spannungsteilerpotential abgreifbar. Der Spannungsteiler ist derart dimensioniert, dass das Spannungsteilerverhältnis $R_{51}/(R_{51}+R_{52})$ sich umgekehrt proportional zum Ausgangspotential des Schaltreglers verhält. Das Spannungsteilerverhältnis ergibt sich aus der am Fußpunktwiderstand abfallenden Spannung geteilt durch der über beide Widerstände abfallenden Spannung.

Der Spannungsteiler ist typischerweise extern ausgebildet, damit beispielsweise durch Auswechslung bzw. Veränderung der Widerstände des Spannungsteilers die gewünschte Ausgangsspannung je nach Anforderung veränderbar ist. Auf diese Weise bleibt das Regelverhalten auch bei Veränderung der Komponenten des Spannungsteilers unabhängig von der Wahl der Ausgangsspannung.

In einer sehr vorteilhaften Ausgestaltung der Erfindung sind die Mittel zur Adaption der Verstärkung des Integrators im Integrator selbst mitintegriert. Da aufgrund der Funktionalität des Integrators dieser die Ausgangsspannung zur Stromregelung ohnehin erfassen muss, ist für diese Funktionalität kein zusätzlicher Anschlusspin erforderlich.

Zur Realisierung eines Integrators mit mitintegrierten Mitteln zur Adaption der Verstärkung eignet sich besonders vorteilhaft ein Multiplizierer bzw. Dividierer in Form einer erweiterten Gilbert-Zelle, da neben der Differenzbildung der beiden Eingangssignale, von denen eines das Ausgangspotential und das andere das Drosselpotential ist, auch eine Temperaturkompensation vorzunehmen ist. Über die Gilbert-Zelle wird vorteilhafterweise gleichzeitig eine Temperaturkompensation zur Verfügung gestellt.

Da die Erfassung der Eingangsströme über Widerstände des Spannungsteiles erfolgt, muss der Temperaturkoeffizient dieser Widerstände über einen Referenzstrom mit gleichem Temperaturkoeffizienten kompensiert werden. Durch den erfindungsgemäßen Integrator mit mitintegrierter Gilbert-Zelle wird der Referenzstrom durch das am negativen Eingang anliegende Ausgangspotential des Schaltreglers derart moduliert, dass der Referenzstrom direkt proportional ist zu dem entsprechenden Spannungsleiterwiderstand multipliziert mit dem Ausgangspotential, wodurch sich die gewünschte Temperaturabhängigkeit der Transkonduktanz ergibt.

In einer typischen Ausgestaltung der Erfindung weist der äußere Regelkreis des Current-Mode-Schaltreglers eine erste Regelschaltung auf, der als Regelgröße das Potential am Mittelabgriff des Spannungsteilers zugeführt wird. In den jeweils anderen Eingang der ersten Regelschaltung wird typischerweise ein Referenzpotential eingekoppelt. Der innere Regelkreis weist ebenfalls eine Regelschaltung auf, in die zum einen als Regelgröße das Regelsignal des Integrators und zum anderen das Ausgangssignal der ersten Regelschaltung zugeführt wird. Die zweite Regelschaltung erzeugt ausgangsseitig wiederum ein Regelsignal, welches zur Ansteuerung des Halbleiterschalters dient.

In einer typischen Ausgestaltung ist der Integrator als spannungsgesteuerte Stromquelle ausgebildet. Als Integrator kann hier ein Transkonduktanzverstärker und/oder ein Operationsverstärker mit nachgeschaltetem kapazitiven Element vorgesehen sein.

Die zweite Regelschaltung weist in einer typischen Ausgestaltung einen Pulsweitenmodulator auf, der an seinem Ausgang zur Ansteuerung des Schalttransistors gepulste Ansteuersignal bereitstellt und zu diesem Zweck zumindest einen pulsweitenmodulierten Komparator sowie eine taktgesteuerte Speichereinrichtung aufweist.

In einer vorteilhaften Weiterbildung der Erfindung ist eine Kompensationseinrichtung vorgesehen, die bei einer Regelabweichung der ersten Regelschaltung ein von dieser Regelabweichung abgeleitetes Kompensationssignal erzeugt, das dem vom Laststrom abgeleiteten Regelsignal überlagert wird und als Regelgröße in die innere Regelschaltung eingekoppelt wird. Typischerweise wird die Ausgangsgröße der Kompensationseinrichtung begrenzt.

Die Regelung der Kompensationseinrichtung erfolgt träge. Die Trägheit kann vorteilhafterweise über das integrierende Element des Integrators eingestellt werden.

In einer besonders vorteilhaften Ausgestaltung ist der steuerbare Halbleiterschalter als MOSFET, insbesondere als Depletion-MOSFET, ausgebildet. Als steuerbarer Halbleiterschalter kann beispielsweise ein Leistungs-MOSFET, insbesondere ein Depletion-Leistungs-MOSFET, ein Bipolartransistor, ein Triac, ein IGBT, ein Thyristor oder dergleichen verwendet werden. Alternativ wäre auch ein Relais zum Schalten der Leistung denkbar.

In einer vorteilhaften Ausgestaltung der Erfindung ist nahezu der gesamte Current-Mode-Schaltregler auf einem einzigen Halbleiterchip integriert, so dass lediglich der Spannungsteiler extern ausgebildet ist und über eine Klemme dem Current-Mode-Schaltregler zugeschaltet ist.

Die bevorzugte, jedoch nicht notwendigerweise ausschließliche Anwendung, finden die erfindungsgemäßen Current-Mode-Schaltregler bei getakteten Stromversorgungen. Besonders vorteilhaft ist die Erfindung in einem Schaltnetzteil mit einem Current-Mode-Schaltregler.

Zwar ist der erfindungsgemäße Current-Mode-Schaltregler in der nachfolgenden Beschreibung der Figuren als Tiefsetzsteller (Buck-Converter) ausgebildet. Die Erfindung ist jedoch nicht auf einen Tiefsetzsteller beschränkt, sondern kann bei jedem Current-Mode-Schaltregler, wie beispielsweise bei einem Hochsetzsteller (Boost-Converter), Sperrwandler (Fly-Back-Converter), oder daraus abgeleiteten Konvertern vorteilhaft eingesetzt werden.

Vorteilhafte Ausgestaltungen und Weiterbildungen der Erfindung sind den weiteren Unteransprüchen sowie der Beschreibung unter Bezugnahme auf die Figuren der Zeichnung entnehmbar.

Die Erfindung wird nachfolgend anhand der in den Figuren der Zeichnung angegebenen Ausführungsbeispiele näher erläutert. Es zeigt dabei:

Figur 1    ein allgemeines Blockschaltbild eines erfindungsgemäßen Current-Mode-Schaltreglers;

Figur 2    ein detailliertes Ausführungsbeispiel eines erfindungsgemäßen Current-Mode-Schaltreglers;

Figur 3    einige Signal-/Zeit-Diagramme des erfindungsgemäßen Schaltreglers;

Figur 4    ein Schaltungsdetail für einen erfindungsgemäßen Current-Mode-Schaltregler entsprechend Fig. 1, bei dem eine spannungsgesteuerte Stromquelle für den als Gilbert-Zelle ausgebildeten Integrator dargestellt ist.

In den Figuren der Zeichnung sind gleiche bzw. funktionsgleiche Elemente und Signale, sofern nichts anderes angegeben ist, mit gleichen Bezugszeichen versehen.

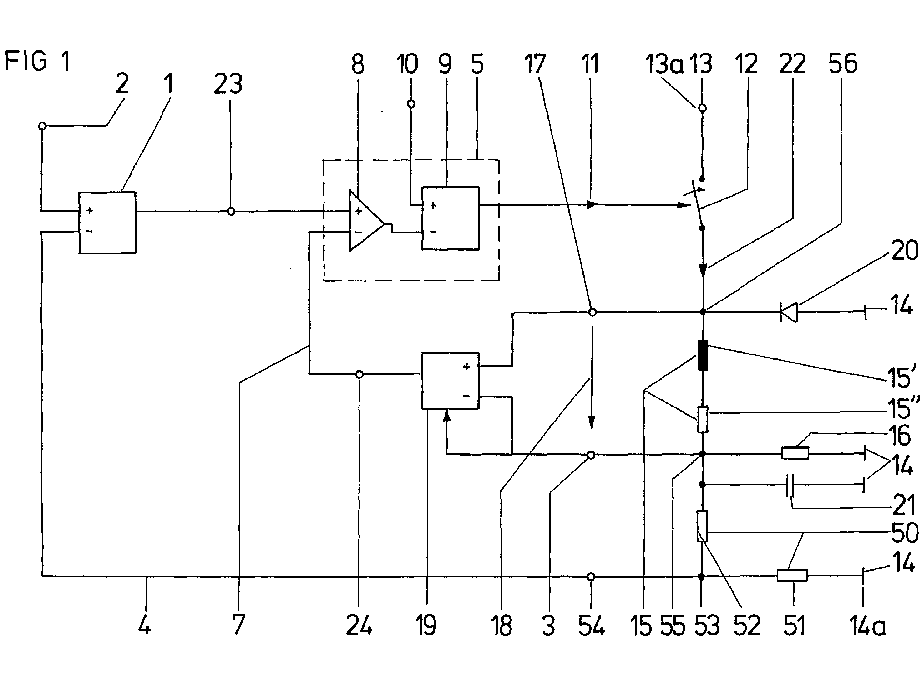

Figur 1 zeigt ein allgemeines Blockschaltbild des erfindungsgemäßen Current-Mode-Schaltreglers, beispielsweise für den Einsatz in einem Schaltnetzteil.

Der Current-Mode-Schaltregler in Figur 1 enthält eine erste Regelschaltung 1. Die erste Regelschaltung 1 weist zwei Regeleingänge und einen Ausgang auf. Im vorliegenden Ausführungsbeispiel wird dem positiven Eingang der ersten Regelschaltung 1 ein Referenzpotential 2 zugeführt. Dem negativen Eingang der ersten Regelschaltung 1 wird über einen Rückkopplungszweig 4 als Regelgröße ein Spannungsteilerpotential 54 des Schaltreglers eingekoppelt. Am Ausgang der ersten Regelschaltung 1 ist ein Sollpotential 23 abgreifbar, das einer nachgeschalteten zweiten Regelschaltung 5 zugeführt wird.

Die zweite Regelreinrichtung 5 ist hier als Einrichtung zur Pulsweitenmodulation (PWM). Die PWM-Einrichtung umfasst einen PWM-Komparator 8, in dessen positiven Eingang das Sollpotential 23 und in dessen negativen Eingang über den Rückkoppelungszweig 7 das Regelsignal 24 eingekoppelt wird. Das Ausgangssignal des PWM-Komparators 8 wird zusammen mit dem Systemtakt 10 einer nachgeschalteten Speichereinrichtung, z.B. einem Latch 9, zugeführt. Am Ausgang des Latches 9 ist dann ein pulsweitenmoduliertes Ansteuersignal 11 abgreifbar, über das der Steueranschluss eines nachgeschalteten Schalter 12 angesteuert wird. Der Schalter 12 ist hier als Laststromschalter zum Schalten großer Lasten ausgebildet.

Der Laststromschalter 12 ist zwischen einer ersten Klemme 13a mit einem ersten Versorgungspotential 13 und einer zweiten Klemme 14a mit einem zweiten Versorgungspotential 14 geschaltet. Das erste Versorgungspotential 13 kann dabei das positive Versorgungspotential sein, während das zweite Versorgungspotential 14 das Potential der Bezugspotential sein kann.

In Reihe zur Laststromstrecke des Leistungsschalters 12 ist eine Impedanz 15 sowie eine Last 16, die nicht notwendigerweise resistiv sein muss, geschaltet. Die Impedanz 15 besteht in Figur 1 aus einer Drosselinduktivität 15' sowie einem dazu in Reihe geschalteten resistivem Element 15''. Die Drosselinduktivität ist typischerweise als Spule ausgebildet, während das resistive Element 15 II als realer ohmscher Widerstand und/oder als parasitärer Widerstand, der typischerweise einer jeden Spule inhärent ist ausgebildet sein. Am Abgriff 55 zwischen Impedanz 15 und Last 16 ist das Ausgangspotential 3 des Current-Mode-Schaltreglers abgreifbar. Am Abgriff 56 zwischen Impedanz 15 und Leistungsschalter 12 ist ein Messpotential 17 abgreifbar.

Die an der Impedanz 15 abfallende Spannung 18 wird einem Integrator 19, z.B einer spannungsgesteuerten Stromquelle zugeführt. Dabei wird das Messpotential 17 dem positiven Eingang und das Ausgangspotential 3 dem negativen Eingang des Integrators 19 zugeführt. Der Integrator 19 erzeugt das Regelsignal 24, das wie oben erwähnt über den Rückkopplungszweig 7 als Regelgröße der PWM-Einrichtung zugeführt wird.

Zusätzlich ist in Figur 1 ein Freilaufelement 20 vorgesehen. Das Freilaufelement 20 ist hier als Freilaufdiode vorgesehen und zwischen dem Abgriff 56 und der Bezugsmasse angeordnet. Darüber hinaus zeigt Figur 1 ein Element zur Spannungsglättung 21 sowie einen Spannungsteiler 50. Das Element zur Spannungsglättung 21 ist hier als Glättungskondensator ausgebildet. Der Glättungskondensator 21 sowie der Spannungsteiler 50 sind zueinander und zur Last 16 parallel geschaltet. Der Spannungsteiler 50 besteht aus zwei Widerständen 51, 52, an deren Mittelabgriff 53 ein Spannungsteilerpotential 54 abgreifbar ist. Das Spannungsteilerpotential 54 ist dann - wie oben erwähnt - der ersten Regelschaltung 1 über den Rückkoppelungszweig 4 führbar.

Der steuerbare Leistungsschalter 12 kann durch jede Art eines durch Feldeffekt gesteuerten Transistors, Bipolartransistors oder ähnlichen steuerbaren Schaltern ausgebildet sein. Wesentlich ist hier lediglich, dass der steuerbare Leistungsschalter 12 zum Schalten eines (gepulsten) Laststromes 22 im Lastkreis des Schaltreglers geeignet ist.

Im vorliegenden Ausführungsbeispiel ist die Impedanz 15 zwischen Last 16 und Leistungsschalter 12 geschaltet. Die Drosselspule 15 könnte jedoch auch zwischen Leistungsschalter 12 und erster Klemme 13a geschaltet sein. Die Drosselinduktivität 15' kann als Spule, als Teil eines Transformators oder einem ähnlichen induktiven Element gebildet werden. Wesentlich ist hier lediglich, dass die Drosselinduktivität 15' im Lastkreis des Schaltreglers angeordnet ist.

Der Glättungskondensator 21 und die Drosselinduktivität 15 dienen zur Glättung des Ausgangspotentials 3 bzw. des Laststromes 22 des Current-Mode-Schaltreglers. Das Freilaufelement 20 dient dem Schutz des Leistungsschalters 12 vor Zerstörung bei Überschreiten dessen Sperrspannung.

Die erste Regelschaltung 1 ist Bestandteil eines äußeren Regelkreises, während die zweite Regelschaltung 5 Teil des inneren Regelkreises ist. Die erste Regelschaltung 1 dient dabei der Regelung des Ausgangspotentials 3 des Schaltreglers, während die zweite Regelschaltung 5 zur Regelung des Laststromes 22 vorgesehen ist.

Die zweite Regelschaltung 5 weist nicht notwendigerweise eine PWM-Einrichtung entsprechend Figur 1 auf. Wesentlich ist hier lediglich, dass die zweite Regelschaltung 5 Mittel zur Regelung des Laststromes 22 enthält.

In der Schaltungsanordnung entsprechend Figur 1 wird die Messspannung nicht wie bisher üblich an einem resistiven Messelement, beispielsweise einem Messwiderstand, abgegriffen und als Regelgröße des inneren Regelkreises rückgekoppelt. Es wird hier vielmehr die Spannung an der ohnehin vorhandenen und zwingend notwendigen Drosselinduktivität 15' abgegriffen. Diese Drosselspannung 18 wird dann einem Integrator 19' zugeführt. Auf diese Weise wird der Laststrom 22 durch Messung des Spannungsabfalls 18 über der Drosselinduktivität 15 und zeitliche Integration ermittelt. Am Ausgang des Integrators 19 ist dann ein vom Laststrom 22 abgeleitetes Regelsignal 24 abgreifbar, das als Regelgröße des inneren Regelkreis der PWM-Einrichtung zuführbar ist.

Erfindungsgemäß soll nun durch Adaption der Verstärkung des Integrators 19 erreicht werden, dass die Regelcharakteristik unabhängig von der jeweils gewählten Ausgangsspannung ist. Zur Adaption der Verstärkung des Integrators 19 weist dieser eine Transkonduktanz $G_{19}$ auf, die sich proportional zum Kehrwert des Ausgangspotentials $V_{55}$ verhält, also:

$$G_{19} \propto \frac{1}{V_{55}} \qquad\qquad (1)$$

Da der Integrator ohnehin die das Ausgangpotential 55 bzw. die Drosselspannung 18 erfassen muss, ist hierfür kein zusätzlicher Anschlusspin erforderlich. Die Dimensionierung des typischerweise extern ausgebildeten Spannungsteilers 50 führt zu dem folgenden Teilerverhältnis

$$\frac{V_{53}}{V_{55}} = \frac{R_{51}}{R_{51} + R_{52}} \propto \frac{1}{V_{55}} \qquad\qquad (2),$$

wobei mit $V_{53}$, $V_{55}$ die entsprechenden Potential 53, 55 und mit $R_{51}$, $R_{52}$ die Widerstände 51, 52 des Spannungsteilers 50 bezeichnet sind. Somit ist das Teilverhältnis des Spannungsteilers 50 also auch umgekehrt proportional zum Ausgangpotential 55.

Für die Realisierung des Integrator 19 bietet sich die Verwendung eines Multiplizierers oder Dividierers beispielsweise in Form einer Gilbertzelle an. Der Ausgangsstrom $I_{24}$ des Multiplizierers beträgt dann

$$I_{24} = C_{19} \frac{dV_{19}}{dt} \qquad\qquad (3),$$

wobei mit $C_{19}$, die Kapazität des Integrators 19, insbesondere des Kondensators 34, bezeichnet ist und $V_{19}$ die an dieser Kapazität abfallende Spannung ist. Die Beziehung

$$I_{24} = G_{19} L_{15} \frac{dI_{22}}{dt} \qquad\qquad (4)$$

führt dann zu

$$V_{19} = const\, I_{22} \propto I_{22} \qquad\qquad (5).$$

$G_{19}$ bezeichnet hier die Transkonduktanz des Integrators, $I_{22}$, den Laststrom 22 und $L_{15}$ die Drosselinduktivität 15. Durch die geeignete Wahl der Transkonduktanz ist hängt somit das Ausgangpotential des Integrators 19 lediglich vom Laststrom 22 ab. Figur 5 zeigt, wie sich die Transkonduktanz $G_{19}$ in Abhängigkeit vom Ausgangpotential $V_{55}$ für verschiedenen Werte des Ausgangpotential $V_{55}$ verhält.

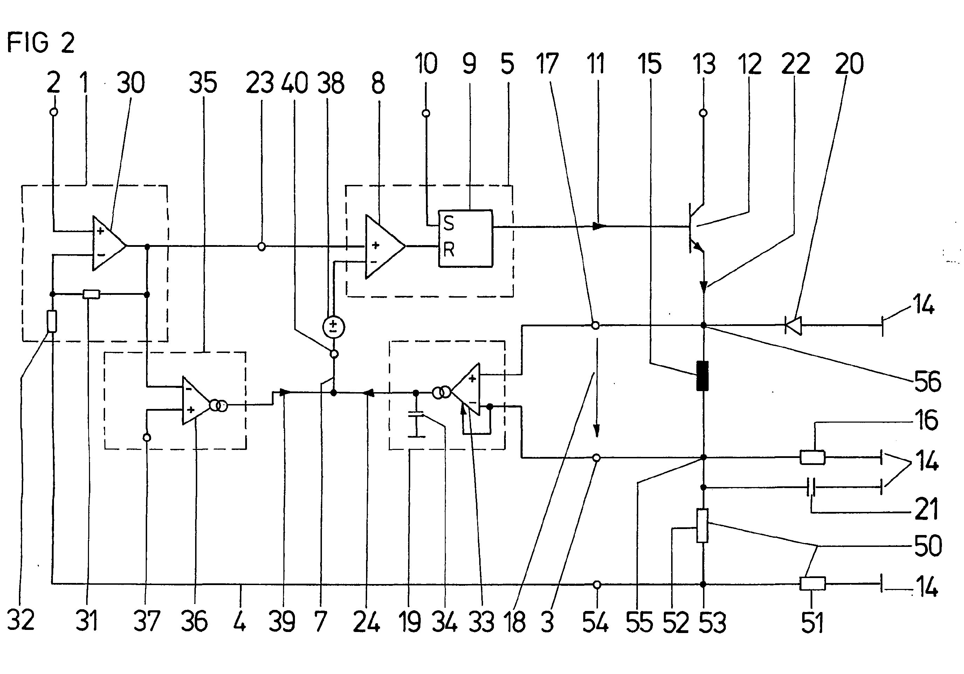

Die genaue Funktionsweise des erfindungsgemäßen Current-Mode Schaltreglers wird nachfolgend anhand eines Detailschaltbildes entsprechend Figur 2 näher erläutert. In Figur 2 ist ein bevorzugtes Ausführungsbeispiel der erfindungsgemäßen Schaltungsanordnung aus Figur 1 angegeben, das zusätzlich Mittel zur Kompensation einer Regelabweichung des äußeren Regelkreises aufweist.

In Figur 2 ist die erste Regelschaltung 1 als Verstärker ausgebildet, dessen Verstärkung in der Regel frequenzabhängig ist. Die erste Regelschaltung 1 enthält einen Komparator 30, zwischen dessen Ausgang und negativem Eingang ein erster Widerstand 31 geschaltet ist. Der Parallelschaltung des Komparators 30 und des Widerstandes 31 ist ein zweiter Widerstand 32 in Reihe vorgeschaltet ist. Über das Verhältnis der Widerstandswerte des ersten Widerstandes 31 und des zweiten Widerstandes 32 ist somit bekanntermaßen der Verstärkungsfaktor des Verstärkers und damit der ersten Regelschaltung 1 dimensionierbar.

Die PWM-Einrichtung 5 ist in Figur 2 durch einen PWM-Komparator 8 und einem dem PWM-Komparator 8 nachgeschalteten RS-Flip-Flop 9 realisiert. Dabei wird das Ausgangssignal des PWM-Komparators 8 in den Reset-Eingang und der Systemtakt 10 in den Set-Eingang des RS-Flip-Flops 9 eingekoppelt. Das am Ausgang des RS-Flip-Flops 9 abgreifbare pulsweitenmodulierte Ansteuersignal 11 wird dem Steueranschluss des nachgeschalteten Leistungsschalters 12 zugeführt. Der Leistungsschalter 12 ist hier als npn-Bipolartransistor realisiert. Das als RS-Flip-Flop 9 ausgebildete Latch dient dazu, dass jeweils nur ein Puls pro Taktperiode dem Steueranschluss des nachgeschalteten Leistungsschalters 12 zugeführt wird. Im eingeschwungenen Zustand fließt im Mittel somit ein konstanter Laststrom.

Der durch die Drosselspannung 18 gesteuerte Integrator 19 ist in Figur 2 als Transkonduktanzverstärker 33 mit nachgeschaltetem integrierenden Element 34 ausgebildet. Zwischen dem Ausgang des Transkonduktanzverstärkers 33 und der zweiten Klemme der Versorgungsspannungsquelle ist als integrierendes Element 34 ein Kondensator geschaltet. Es wäre selbstverständlich auch denkbar, als Integrator 19 einen Operationsverstärker zu verwenden, jedoch wäre diese Möglichkeit schaltungstechnisch sehr viel aufwendiger.

Der Transkonduktanzverstärker 33 erzeugt aus der Messspannung über der Drosselinduktivität 15, d. h. aus der Differenz des Messpotentials 17 und des Ausgangspotentials 3, einen Ausgangsstrom, der über das integrierende Element 34 über die Zeit aufintegriert wird. Der aufintegrierte Ausgangsstrom 24 bildet dann den Laststrom 22 ab. Über den Rückkopplungszweig 7 wird dann das sich ergebende Regelpotential 40 über eine Spannungsquelle 38, die zur Realisierung der erforderlichen, sogenannten "Slope Compensation" dient, als Regelgröße des inneren Regelkreises rückgekoppelt. Die Trägheit dieses inneren Regelkreises bzw. der zweiten Regelschaltung 5 ist über den Kondensator 34 dimensionierbar. Die "Slope Compensation" gewährleistet bei einem Current-Mode-Schaltregler ein stabiles Tastverhältnis oberhalb von 50 %. Sie soll zur Gewährleistung der Stabilität dem der zweiten Regelschaltung 5 zugefügten Regelsignal 40 mit einer Spannungsrampe überlagern. Hierdurch kann das Tastverhältnis auch bei Werten oberhalb 50% stabil gehalten werden.

Eine besonders einfache Realisierung der "Slope Compensation" wenn eine in Figur 2 nicht dargestellte, durch den Systemtakt gesteuerte Stromquelle vorgesehen ist, die einen pulsförmigen Strom in das integrierende Element 34 einspeist. Bei einer geeigneten Amplitude der Stromimpulse ergibt sich auf Grund der integrierenden Wirkung des integrierenden Elements die zur Slope Compensation erforderliche Spannungsrampe. Der Vorteil gegenüber einer herkömmlichen Realisierung besteht darin, dass der schaltungstechnische Aufwand sehr viel niedriger bleibt.

Zusätzlich ist in Figur 2 eine sogenannte "Feed-Forward Regelschaltung" zur Kompensation einer Regelabweichung der Sollspannung des äußeren Regelkreises vorgesehen. Dazu ist eine Kompensationseinrichtung 35 vorgesehen, die einen zweiten Transkonduktanzverstärker 36 und einen nicht dargestellten Kondensator enthält. Dem negativen Eingang des Transkonduktanzverstärkers 36 wird das Sollpotential 23 der ersten Reglereinrichtung 1 zugeführt. Dem positiven Eingang des Transkonduktanzverstärkers 36 wird ein zweites Sollpotential 37 einer Sollwertspannungsquelle zugeführt. Am Ausgang der Kompensationseinrichtung ist dann ein Kompensationssignal 39 abgreifbar, das über den Rückkopplungszweig 7 zusammen mit dem Ausgangsstrom 24 das Regelpotential 40 erzeugt und in den Regeleingang der PWM-Einrichtung eingekoppelt wird. Nachfolgend wird die Funktionsweise dieser Kompensationseinrichtung 35 näher erläutert.

Wie oben erläutert ergibt sich der Verstärkungsfaktor des Komparators 30 und damit der ersten Regelschaltung 1 über das Verhältnis der Widerstandswerte der Widerstände 31 und 32. Weist jedoch der Komparator 30 eine zu kleine Verstärkung auf, dann kann es zu einer Regelabweichung im Ausgangssignal der ersten Regelschaltung 1 kommen, d. h. es kommt zu einer Abweichung des von der ersten Regelschaltung 1 ausgangsseitig erzeugten Sollpotentiales 23 von einem vorgegebenen Sollpotential 37.

Eine Vergrößerung des Verstärkungsfaktors des Komparators 30 durch geeignete Dimensionierung der Widerstände 31, 32 ist jedoch nur begrenzt möglich, da bei einer zu großen Verstärkung der äußere Regelkreis nicht stabil ist und anfängt zu schwingen. Beispielsweise ergibt sich bei einem Verstärkungsfaktor V = 10 eine Regelabweichung des Sollpotentials 23 der ersten Reglereinrichtung 1 vom vorgegebenen Sollpotential 37 von etwa 10%.

Zur Kompensation dieser Regelabweichung wird das Sollpotentials 23 der ersten Regelschaltung 1 der Kompensationsvorrichtung 35 zugeführt. Bei einer Regelabweichung wird am Ausgang der Kompensationsvorrichtung 35 ein Kompensationssignal 39 erzeugt. Dieses Gleichspannungssignal 39 wird dem ausgangsseitig von der spannungsgesteuerten Stromquelle 19 bereitgestellten Wechselspannungssignal 24 überlagert. In die PWM-Einrichtung wird dann ein wechselspannungsüberlagertes Gleichspannungssignal 40 als Regelgröße zugeführt. Bei einer Regelabweichung des Sollpotentials 23 wird somit ein der Regelabweichung entsprechender Gleichanteil zur Kompensation in den negativen Eingang der PWM-Einrichtung eingekoppelt. Auf diese Weise wird erreicht, dass die Ausgangsspannung des äußeren Reglers und damit auch dessen Eingangsspannung auf einem festen Potential, dass heißt dem vorgegebenen Sollwertpegel des Sollpotentials liegt. Es wird dadurch vermieden, dass eine Regelabweichung im Ausgangssignal des äußeren Regelkreises beibehalten wird und sich somit ungünstig auf die Stabilität des Regelsystems auswirkt.

Bei geringen Regelabweichungen ist es nicht erforderlich bzw. häufig auch nicht erwünscht, diese sofort, d. h. dynamisch ohne Verzögerung auszuregeln. Es ist daher typischerweise ein die Trägheit der Kompensationseinrichtung bestimmendes Element, das typischerweise durch ein Kondensator ausgebildet ist, vorgesehen. Vorteilhafterweise wird in Figur 2 dieser Kondensator durch den Kondensator 34 der spannungsgesteuerten Stromquelle 19 gebildet. Auf diese Weise kann ein Kondensator eingespart werden.

Die Kompensationseinrichtung ist bekanntermaßen ein Integrator und kann daher, ähnlich wie der Integrator 19, durch jede Art einer spannungsgesteuerten Stromquellen ausgebildet sein. Die Spannungs-Strom-Wandlung der Kompensationseinrichtung 35 ist somit auch nicht notwendigerweise auf einen Transkonduktanzverstärker 36 beschränkt, sondern kann beispielsweise auch durch einen Operationsverstärker ersetzt werden.

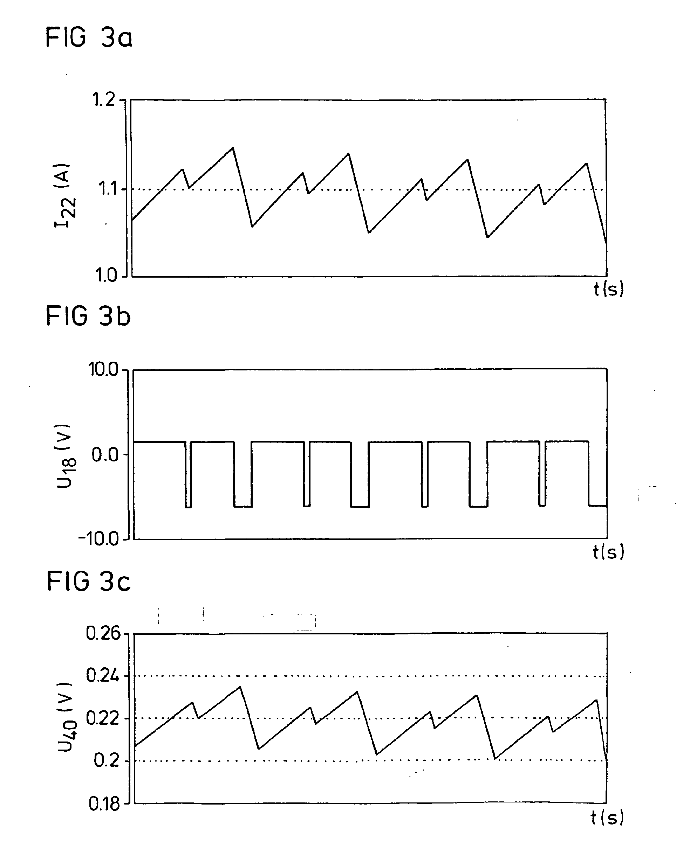

Figur 3 zeigt drei Signal-/Zeit-Diagramme der Schaltungsanordnung bei einem festen vorgegebenen Ausgangspotential 55 entsprechend Figur 1. Figur 3a zeigt in einer Simulation der Schaltungsanordnung entsprechend Figur 2 den zeitlichen Verlauf des Laststromes 22, Figur 3b den zeitlichen Verlauf der Drosselspannung 18 und Figur 3c den zeitlichen Verlauf des durch die spannungsgesteuerte Stromquelle 19 ermittelten Laststromes 22, bei dem der Gleichspannungsanteil des Regelsignals durch das Kompensationssignal 39 der dritten Regelschaltung "verfälscht" wurde.

Im eingeschwungenen Zustand stellt sich ein Laststrom 22 im Lastkreis des Schaltreglers ein (Figur 3a). Die gemessene Drosselspannung 18 repräsentiert die zeitliche Ableitung dieeckförmigen Drosselspannung 18 ergibt sich dann ein Regelpotential 40, das exakt die gleiche Kurvenform wie der Laststrom 22 aufweist.

In dem Integrator 19 soll bekanntlich ein den Laststrom 22 abbildendes Signal erzeugt werden, d.h. es soll ein Strom in eine Spannung transformiert werden, um diese dann weiter zu verarbeiten. Dies könnte zwar auf einfache Weise dadurch geschehen, indem eine Spannungsquelle über einen Widerstand mit einem Stromspiegel verbunden wird, jedoch hat eine derartige Anordnung den Nachteil, dass sich die Spannung, die über dem Widerstand abfällt, aus der Differenz der zur transformierenden Spannungsquelle und den Spannungsabfall am Basistransistor am Stromspiegel zusammensetzt und somit der Strom durch den Widerstand nicht nur den Temperaturkoeffizienten des Widerstandes, sondern auch den des verwendeten Transistors widerspiegelt. Wird ein derartig gespiegelter Ausgangsstrom neben entsprechend abgeleiteten Strömen in einen Multiplizierer oder Dividierer, wie z.B. einer Gelberntzelle eingespeist, dann ergibt sich aufgrund des Basis-Emitter-Spannungsabfalls eine nicht-lineare Ausgangslinie, die es zu vermeiden gilt. Es ist daher wünschenswert, diesen Basis-Emitter-Spannungsanteil zu $V_{be}$ vermeiden bzw. zu entfernen.

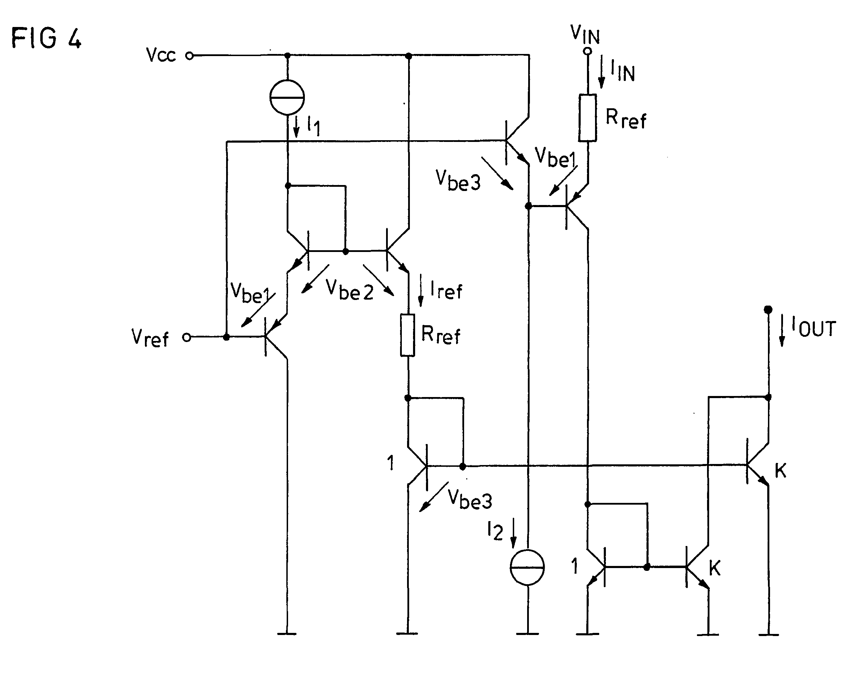

Figur 4 zeigt eine Detailschaltung mittels der dies vermieden wird. Erfindungsgemäß wird hier ein Referenzwiderstand $R_{ref}$ zwischen die Eingangsspannung $V_{IN}$ und einer bekannten Hilfsspannung $V_{ref}$ angeschlossen und in dem sich nun einstellenden Strom durch den Referenzwiderstand $I_{IN}$ wird ein zusätzlicher Referenzstrom $I_{ref}$ hinzu addiert, der sich aus dem Spannungsabfall der selben Hilfsspannung $V_{ref}$ über einen baugleichen Referenzwiderstand $R_{ref}$ ergibt. In einer vorteilhaften Ausgestaltung kann die benötigte Hilfsspannung $V_{ref}$ aus einer unstabilisierten Referenzspannung $V_{ref}$ durch hintereinanderschalten von Emitter- und Sourcefolgern gewonnen werden.

Die Erfindung sei nicht ausschließlich auf die Ausführungsbeispiele gemäß der Figuren 1, 2, 4 beschränkt. Vielmehr können beispielsweise die in Fig. 1 angegebenen Schaltungsblöcke, das heißt die innere und die äußere Regelschaltung, sowie der Integrator, auf mannigfaltige Art und Weise schaltungstechnisch realisiert sein.

Zusammenfassend kann festgestellt werden, dass durch den wie beschrieben aufgebauten Current-Mode-Schaltregler durch Adaption des Integrators auf einfache, jedoch nichtsdestotrotz effektive Weise eine Regelcharakteristik bereitgestellt werden kann, die weitgehend unabhängig von der jeweiligen Ausgangsspannung ist.

Die vorliegende Erfindung wurde anhand der vorstehenden Beschreibung so dargelegt, um das Prinzip der Erfindung und dessen praktische Anwendung bestmöglichst zu erklären. Selbstverständlich lässt sich die vorliegende Erfindung im Rahmen des fachmännischen Handels und Wissens in geeigneter Weise in mannigfaltigen Ausführungsformen und Abwandlungen realisieren.

Bezugszeichenliste

1        erste Regelschaltung, Regler des äußeren Regelkreises

2        Referenzpotential

3        Ausgangspotential des Schaltreglers

4        (erster) Rückkopplungszweig

5        zweite Regelschaltung, Regler des inneren Regelkreises, PWM-Einrichtung

7        (zweiter) Rückkopplungszweig

| | |
|---|---|
| 8 | PWM-Komparator |
| 9 | Latch, Flip-Flop |
| 10 | Systemtakt |
| 11 | (pulsweitenmoduliertes) Ansteuersignal |
| 12 | steuerbarer Leistungsschalter/Leistungstransistor |
| 13, 14 | erstes/zweites Versorgungspotential |
| 13a, 14a | erste/zweite Klemme eines Versorgungspotentials |
| 15 | Impedanz |
| 15' | Drosselinduktivität, Drosselspule |
| 15" | parasitärer Widerstand |
| 16 | Last |
| 17 | Messpotential, Potential an der Impedanz |
| 18 | Drosselspannung |
| 19 | spannungsgesteuerte Stromquelle |
| 20 | Freilaufelement, Freilaufdiode |
| 21 | Element zur Spannungsglättung, Glättungskondensator |
| 22 | Laststrom |
| 23 | (von der ersten Regelschaltung erzeugtes) Sollpotential |
| 24 | Ausgangssignal des Integrators |
| 30 | Komparator der ersten Regelschaltung |
| 31, 32 | erster/zweiter Widerstand der ersten Regelschaltung |
| 33 | (erster) Transkonduktanzverstärker |
| 34 | integrierendes Element, Kondensator |
| 35 | Kompensationseinrichtung |
| 36 | (zweiter) Transkonduktanzverstärker |
| 37 | (vorgegebenes) Sollpotential |
| 38 | Spannungsquelle |
| 39 | Kompensationssignal |
| 40 | Regelsignal/-potential des inneren Regelkreises |

| 50 | Spannungsteiler |
|---|---|
| 51, 52 | Spannungsteilerwiderstände |
| 53 | Mittelabgriff des Spannungsteilers |
| 54 | Spannungsteilerpotential |
| 55,56 | Abgriff |

**Patentansprüche**

1. Current-Mode-Schaltregler
   mit mindestens einem steuerbaren Halbleiterschalter (12),
   dessen Laststrecke zwischen einer ersten Klemme (13a) mit einem ersten Versorgungspotential (13) und einer zweiten Klemme (14a) mit einem zweiten Versorgungspotential (14) angeordnet ist,
   mit einer induktiven Impedanz (15) und einem Spannungsteiler (50),
   die in Reihe zur Laststrecke des steuerbaren Halbleiterschalters (12) angeordneten sind,
   an deren Abgriff (55) ein Ausgangspotential (3) abgreifbar ist,
   mit einem äußeren Regelkreis (1,4,5) zur Spannungsregelung und einem mit dem äußeren Regelkreis (1,4,5) gekoppelten inneren Regelkreis (5,7,19) zur Laststromregelung,
   die den steuerbaren Halbleiterschalter (12) nach Maßgabe eines Laststromes (22)und des Ausgangspotentials (3) ansteuern,
   mit einem Integrator (19),
   in den eine über der induktiven Impedanz (15) abfallende Spannung (18) eingekoppelt wird,
   der durch zeitliche Integration der Spannung (18) ein den Laststrom (22) abbildendes Regelsignal (24,40) erzeugt, welches als Regelgröße dem inneren Regelkreis (5, 7, 19) zugeführt wird,
   mit Mitteln (19,50) zur Adaption der Verstärkung des Integrators (19),
   die mindestens eine Transkonduktanz aufweisen, dessen Wert im eingeschwungenen Zustand umgekehrt proportional zum Ausgangspotential (55) ist.

2. Schaltregler nach Anspruch 1,
   **dadurch gekennzeichnet,**
   **dass** die Impedanz (15) ausschließlich aus einer Drosselspule (15') besteht.

3. Schaltregler nach Anspruch 1,
   **dadurch gekennzeichnet,**
   **dass** die Impedanz (15) aus einer Reihenschaltung bestehend aus einer Drosselspule (15') und einem Widerstandselement (15'') besteht.

4. Schaltregler nach einem der vorstehenden Ansprüche,
   **dadurch gekennzeichnet,**
   **dass** ein Spannungsteilerpotential (54) am Mittelabgriff (53) des Spannungsteilers (50) abgreifbar ist, wobei der Spannungsteiler (50) derart dimensioniert ist, dass das Spannungsteilerverhältnis ($R_{51}/(R_{51}+R_{52})$)umgekehrt proportional zum Ausgangspotential (55) ist.

5. Schaltregler nach einem der vorstehenden Ansprüche,
   **dadurch gekennzeichnet,**
   **dass** die Mittel (19,50) in dem Integrator (19) mitintegriert sind.

6. Schaltregler nach einem der vorstehenden Ansprüche,
   **dadurch gekennzeichnet,**
   **dass** die Mittel (19,50) einen als Gilbert-Zelle ausgebildeten Multiplizierer und/oder Dividierer aufweisen.

7. Schaltregler nach einem der vorstehenden Ansprüche,
   **dadurch gekennzeichnet,**
   **dass** der äußere Regelkreis (1,4,5) eine erste Regelschaltung (1) aufweist, dem als Regelgröße das Spannungsteilerpotential (54) zugeführt wird, und

**dass** der inneren Regelkreis (5,7,19) eine zweite Regelschaltung (5) aufweist, der als Regelgröße das Regelsignal (24) und das Ausgangssignal (23) der ersten Regelschaltung (1) zuführbar ist und die ausgangsseitig den Steueranschluss des steuerbaren Halbleiterschalter (12) ansteuert.

8. Schaltregler nach einem der vorstehenden Ansprüche,
   **dadurch gekennzeichnet,**
   **dass** der Integrator (19) als spannungsgesteuerten Stromquelle ausgebildet ist.

9. Schaltregler nach einem der vorstehenden Ansprüche,
   **dadurch gekennzeichnet,**
   **dass** als Integrator (19) ein erster Transkonduktanzverstärker (33) und/oder ein Operationsverstärker mit nachgeschaltetem kapazitiven Element (34) vorgesehen ist.

10. Schaltregler nach einem der vorstehenden Ansprüche,
    **dadurch gekennzeichnet,**
    **dass** die zweite Regelschaltung (5) einen Pulsweitenmodulator aufweist, der zumindest einen pulsweiten modulierten Komparator (8) und eine taktgesteuerte Speichereinrichtung (9) enthält.

11. Schaltregler nach einem der vorstehenden Ansprüche,
    **dadurch gekennzeichnet,**
    **dass** der steuerbare Halbleiterschalter (12) ein MOSFET, insbesondere eine Depletion-MOSFET, oder ein Bipolartransistor ist.

12. Schaltregler nach einem der Ansprüche 7-11,
    **dadurch gekennzeichnet,**
    **dass** eine Kompensationseinrichtung (35) vorgesehen ist, die bei einer Regelabweichung der ersten Regelschaltung (1) ein von dieser Regelabweichung abgeleitetes Kompensationssignal (39) erzeugt, das dem vom Laststrom (22) abgeleiteten Regelsignal (24) überlagert wird und als Regelgröße in die zweite Regelschaltung (5) eingekoppelt wird.

13. Schaltregler nach Anspruch 12,
    **dadurch gekennzeichnet,**
    **dass** die Regelung der Kompensationseinrichtung (35) träge erfolgt, wobei als das die Trägheit bestimmende Element das integrierende Element (34) der ersten Regelschaltung (5) vorgesehen ist.

14. Schaltnetzteil mit einem Current-Mode-Schaltregler nach einem der vorstehenden Ansprüche.

15. Schaltnetzteil nach Anspruch 14,
    **dadurch gekennzeichnet,**
    **dass** der Schaltregler einen Tiefsetzsteller und/oder einen Hochsetzsteller und/oder einen Sperrwandler aufweist.

**Claims**

1. Current-mode switching regulator
   having at least one controllable semiconductor switch (12),
   whose load path is arranged between a first terminal (13a) with a first supply potential (13) and a second terminal (14a) with a second supply potential (14),
   having an inductive impedance (15) and a voltage divider (50),
   which are arranged in series with the load path of the controllable semiconductor switch (12),
   at whose tap (55) an output potential (3) can be 15 tapped off,
   having an outer control loop (1, 4, 5) for voltage regulation and an inner control loop (5, 7, 19) for load current regulation, said inner control loop being coupled to the outer control loop (1, 4, 5)
   which drive the controllable semiconductor switch (12) according to a load current (22) and the output potential (3),
   having an integrator (19),
   into which a voltage (18) dropped across the inductive impedance (15) is coupled,
   which generates, by integrating the voltage (18) with respect to time, a control signal (24, 40) mapping the load current (22), which control signal is fed as controlled variable to the inner control loop (5, 7, 19),

having means (19, 50) for adapting the gain of the integrator (19),
which have at least one transconductance, whose value in the settled state is inversely proportional to the output potential (55).

2. Switching regulator according to Claim 1,
**characterized**
**in that** the impedance (15) exclusively comprises an inductor coil (15').

3. Switching regulator according to Claim 1,
**characterized**
**in that** the impedance (15) comprises a series circuit comprising an inductor coil (15') and a resistance element (15").

4. Switching regulator according to one of the preceding claims,
**characterized**
**in that** a voltage divider potential (54) can be tapped off at the center tap (53) of the voltage divider (50), the voltage divider (50) being dimensioned in such a way that the voltage divider ratio (R51/(R51+R52) is inversely proportional to the output potential (55).

5. Switching regulator according to one of the preceding claims,
**characterized**
**in that** the means (19, 50) are concomitantly integrated in the integrator (19).

6. Switching regulator according to one of the preceding claims,
**characterized**
**in that** the means (19, 50) have a multiplier and/or divider designed as a Gilbert cell.

7. Switching regulator according to one of the preceding claims,
**characterized**
**in that** the outer control loop (1, 4, 5) has a first control circuit (1), to which the voltage divider potential (54) is fed as controlled variable, and
**in that** the inner control loop (5, 7, 19) has a second control circuit (5), to which the control signal (24) and the output signal (23) of the first control circuit (21) can be fed as controlled variable and which, on the output side, drives the control terminal of the controllable semiconductor switch (12).

8. Switching regulator according to one of the preceding claims,
**characterized**
**in that** the integrator (19) is designed as a voltage-controlled current source.

9. Switching regulator according to one of the preceding claims,
**characterized**
**in that** a first transconductance amplifier (33) and/or an operational amplifier with a capacitive element (34) connected downstream is provided as the integrator (19).

10. Switching regulator according to one of the preceding claims,
**characterized**
**in that** the second control circuit (5) has a pulse width modulator containing at least one pulse-width-modulated comparator (8) and a clocked storage device (9).

11. Switching regulator according to one of the preceding claims,
**characterized**
**in that** the controllable semiconductor switch (12) is a MOSFET, in particular a depletion-mode MOSFET, or a bipolar transistor.

12. Switching regulator according to one of Claims 7-11,
**characterized**
**in that** a compensation device (35) is provided, which, in the event of a control deviation of the first control circuit (1), generates a compensation signal (39) derived from said control deviation, which compensation signal is superposed on the control signal (24) derived from the load current (22) and is coupled into the second control circuit (5) as controlled variable.

**13.** Switching regulator according to Claim 12,
**characterized**
**in that** the control of the compensation device (35) is effected sluggishly, the integrating element (34) of the first control circuit (5) being provided as the inertia-determining element.

**14.** Switched-mode power supply having a current-mode switching regulator according to one of the preceding claims.

**15.** Switched-mode power supply according to Claim 14,
**characterized**
**in that** the switching regulator has a buck converter and/or a boost converter and/or a flyback converter.

**Revendications**

**1.** Régulation de commutation à mode courant
comprenant au moins un commutateur (12) à semi-conducteur,
qui peut être commandé et dont la section de charge est disposée entre une première borne (13a) ayant
un premier potentiel (13) d'alimentation et une deuxième borne (14a) ayant un deuxième potentiel (14) d'alimentation,
comprenant une impédance (15) inductive et un diviseur (50) de tension,
qui sont montés en série avec la section de charge du commutateur (12) à semi-conducteur pouvant être commandé,
à la prise (55) duquel peut être prélevé un potentiel (3) de sortie,
comprenant un circuit (1, 4, 5) extérieur de régulation pour la régulation de la tension
et un circuit (5, 7, 19) intérieur de régulation, qui est couplé au circuit (1, 4, 5) extérieur de régulation et qui est destiné à la régulation du courant de charge qui commande le commutateur (12) à semi-conducteur pouvant être commandé en fonction
d'un courant (22) de charge et du potentiel (3) de sortie,
comprenant un intégrateur (19),
auquel est appliquée une tension (18) chutant aux bornes de l'impédance (15) inductive,
qui produit par intégration dans le temps de la tension (18) un signal (24, 40) de régulation reproduisant le courant (22) de charge et envoyé comme grandeur de régulation au circuit (5, 7, 19) intérieur de régulation,
comprenant des moyens (19, 50) d'adaptation de l'amplification de l'intégrateur (19),
qui ont au moins une transconductance dont la valeur est à l'état instantané inversement proportionnelle au potentiel (55) de sortie.

**2.** Régulateur de commutation suivant la revendication 1,
**caractérisé**
**en ce que** l'impédance (15) est constituée exclusivement d'une bobine (15') de self.

**3.** Régulateur de commutation suivant la revendication 1,
**caractérisé**
**en ce que** l'impédance (15) est constituée d'un circuit série constitué d'une bobine (15') de self et d'un élément (15") de résistance.

**4.** Régulateur de commutation suivant l'une des revendications précédentes, **caractérisé**
**en ce qu'**un potentiel (54) de diviseur de tension peut être prélevé à la prise (53) médiane du diviseur (50) de tension, le diviseur (50) de tension ayant des dimensions telles que le rapport $(R_{51}//(R_{51}+R_{52}))$ du diviseur de tension soit inversement proportionnel au potentiel (55) de sortie.

**5.** Régulateur de commutation suivant l'une des revendications précédentes, **caractérisé**
**en ce que** les moyens (19, 50) sont intégrés dans l'intégrateur (19).

**6.** Régulateur de commutation suivant l'une des revendications précédentes, **caractérisé**
**en ce que** les moyens (19, 50) comportent un multiplicateur et/ou un diviseur constitué sous la forme d'une cellule de Gilbert.

**7.** Régulateur de commutation suivant l'une des revendications précédentes, **caractérisé**

**en ce que** le circuit (1, 4, 5) extérieur de régulation comporte un premier circuit (1) de régulation, auquel est envoyé comme grandeur de régulation le potentiel (54) du diviseur de tension, et

**en ce que** le circuit (5, 7, 19) intérieur de régulation comporte un deuxième circuit (5) de régulation, auquel est envoyé comme grandeur de régulation le signal (24) de régulation et le signal (23) de sortie du premier circuit (1) de régulation et qui commande du côté de la sortie la borne de commande du commutateur (12) à semi-conducteur pouvant être commandé.

8. Régulateur de commutation suivant l'une des revendications précédentes, **caractérisé en ce que** l'intégrateur (19) est constitué sous la forme d'une source de courant commandé en tension.

9. Régulateur de commutation suivant l'une des revendications précédentes, **caractérisé en ce qu'**il prévu comme intégrateur (19) un premier amplificateur (33) de transconductance et/ou un amplificateur opérationnel ayant un élément (34) capacitif monté en aval.

10. Régulateur de commutation suivant l'une des revendications précédentes, **caractérisé en ce que** le deuxième circuit (5) de régulation comporte un modulateur en largeur d'impulsion, qui comporte au moins un comparateur (8) modulé en largeur d'impulsion et un dispositif (9) d'accumulation commandé par horloge.

11. Régulateur de commutation suivant l'une des revendications précédentes, **caractérisé en ce que** le commutateur (12) à semi-conducteur pouvant être commandé est un MOSFET, notamment un MOSFET à appauvrissement ou un transistor bipolaire.

12. Régulateur de commutation suivant l'une des revendications 7 à 11, **caractérisé en ce qu'**il est prévu un dispositif (35) de compensation qui, s'il se produit un écart de régulation du premier circuit (1) de régulation, produit un signal (39) de compensation, qui est déduit de cet écart de régulation, qui est superposé au signal (24) de régulation déduit du courant (22) de charge et qui est injecté comme grandeur de régulation dans le deuxième circuit (5) de régulation.

13. Régulateur de commutation suivant la revendication 12, **caractérisé en ce que** la régulation du dispositif (13) de compensation s'effectue avec inertie, l'élément (34) intégrant du premier circuit (5) de régulation étant prévu en tant qu'élément déterminant l'inertie.

14. Alimentation à découpage ayant un régulateur de commutation à mode courant suivant l'une des revendications précédentes.

15. Alimentation à découpage suivant la revendication 14, **caractérisée en ce que** le régulateur de commutation comporte un dévolteur et/ou un survolteur et/ou une alimentation à découpage à récupération.

FIG 1

FIG 2

FIG 3a

FIG 3b

FIG 3c

FIG 4

EP 1 316 138 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19814681 A1

**In der Beschreibung aufgeführte Nicht-Patentliteratur**

- **R. E. TARTER.** Solid-State Power Conversion Handbook. Wiley Interscience, 1993